# EUROPEAN PATENT APPLICATION

(11) **EP 4 132 146 A1**
(43) Date of publication of application: **08.02.2023**
(21) Application number: 20927129.5
(22) Date of filing: 26.03.2020
(51) Int. Cl.: H04W 72/04, H04W 72/12

(54) **TERMINAL, RADIO COMMUNICATION METHOD, AND BASE STATION**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/013731
(87) International publication number: WO 2021/192160

(57) **Abstract**

A terminal according to an aspect of the present disclosure includes a receiving section that receives downlink control information (DCI), and a control section that does not assume transmission of an uplink shared channel (UL-SCH) and an aperiodic channel state information (A-CSI) report and assumes that an aperiodic sounding reference signal (A-SRS) is triggered, in a case that a cyclic redundancy check (CRC) of the DCI is scrambled by a specific radio network temporary identifier (RNTI). According to an aspect of the present disclosure, A-SRS triggering can be appropriately configured.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel. 15/16, an aperiodic SRS (A-SRS) can be triggered by DCI format 0_1/1_1/2_3. However, in a case that an A-SRS is triggered by DCI format 0_1, UL-SCH (UL data) or A-CSI report is also to be transmitted on a PUSCH except for a case that a cyclic redundancy check (CRC) in the DCI (PDCCH) is scrambled by a radio network temporary identifier (RNTI) for SP-CSI reporting (SP-CSI-RNTI).

As described above, existing A-SRS transmission control is somehow inflexible. In a case that the SRS is not appropriately controlled, throughput reduction, communication quality deterioration, or the like may be involved.

As such, an object of the present disclosure is to provide a terminal, a radio communication method, and a base station capable of appropriately configuring A-SRS triggering.

### Solution to Problem

A terminal according to an aspect of the present disclosure includes a receiving section that receives downlink control information (DCI), and a control section that does not assume transmission of an uplink shared channel (UL-SCH) and an aperiodic channel state information (A-CSI) report and assumes that an aperiodic sounding reference signal (A-SRS) is triggered, in a case that a cyclic redundancy check (CRC) of the DCI is scrambled by a specific radio network temporary identifier (RNTI). Advantageous Effects of Invention

According to an aspect of the present disclosure, A-SRS triggering can be appropriately configured.

### Brief Description of Drawings

FIG. 1 is a diagram to show an example of a configuration pattern for DCI format 0_1;
FIGS. 2A, 2B, and 2C are diagrams to show examples of a correspondence relation between a value of an SRS request field and a triggered A-SRS resource set in a case that a UL-SCH identifier is 1 (or a case that a CSI request is triggered);
FIGS. 3A and 3B are diagrams to show other examples of the correspondence relation between a value of the SRS request field and a triggered A-SRS resource set in a case that a UL-SCH identifier is 0 (or a case that the CSI request is not triggered);
FIG. 4 is a diagram to show an example of the correspondence relation between a value of the SRS request field and a triggered A-SRS resource set per RNTI scrambling a CRC of DCI;
FIG. 5 is a diagram to show an example of a correspondence relation between a value of the SRS request field, a value of precoding information and number of layers field, and a triggered A-SRS resource set;
FIG. 6 is a diagram to show an example of a correspondence relation between a value of the SRS request field, a value of a CSI request field, and a triggered A-SRS resource set;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

### (SRS)

In NR, there are various usages of a sounding reference signal (SRS). The SRS in NR is used not only for uplink (UL) CSI measurement that is also used for existing LTE (LTE Rel. 8 to Rel. 14) but also for downlink (DL) CSI measurement, beam management, and the like.

UE may be configured with one or a plurality of SRS resources. The SRS resource may be specified by an SRS resource index (SRS Resource Index (SRI)).

Each SRS resource may include one or a plurality of SRS ports (or correspond to one or a plurality of SRS ports). For example, the number of ports per SRS may be 1, 2, 4, and so on.

The UE may be configured with one or a plurality of SRS resource sets. One SRS resource set may be associated with a certain number of SRS resources. The UE may use a higher layer parameter in common for the SRS resources included in one SRS resource set. Note that the resource set in the present disclosure may be interpreted as a set, a resource group, a group, or the like.

The information related to the SRS resource or the resource set may be configured for the UE by using higher layer signaling, physical layer signaling, or a combination of these.

Note that in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

SRS configuration information (for example, an RRC information element "SRS-Config") may include SRS resource set configuration information, SRS resource configuration information, or the like.

The SRS resource set configuration information (for example, an RRC parameter "SRS-ResourceSet") may include information on an SRS resource set ID (Identifier) (SRS-ResourceSetId), a list of an SRS resource ID (SRS-ResourceId) used in the resource set, an SRS resource type (resourceType), and an SRS usage.

Here, the SRS resource type may indicate any of a periodic SRS (P-SRS), a semi-persistent SRS (SP-SRS), and an aperiodic SRS (A-SRS). Note that the UE may periodically (or periodically, after activation) transmit the P-SRS and the SP-SRS. The UE may transmit the A-SRS based on an SRS request in the DCI.

The SRS usage (an RRC parameter "usage," an L1 (Layer-1) parameter "SRS-SetUse") may be, for example, beam management, codebook, non-codebook, and antenna switching. For example, an SRS for the codebook or non-codebook usage may be used to determine a precoder for a codebook-based or non-codebook-based uplink shared channel (Physical Uplink Shared Channel (PUSCH)) transmission base on the SRI.

As for an SRS for beam management usage, it may be assumed that only one SRS resource in each SRS resource set can be transmitted at a certain time instant. Note that in a case that each of the plurality of SRS resources belong to a different SRS resource set, these SRS resources may be simultaneously transmitted.

The SRS resource configuration information (for example, an RRC parameter "SRS-Resource") may include an SRS resource ID (SRS-ResourceId), the number of SRS ports, an SRS port number, a transmission Comb, an SRS resource mapping (for example, time and/or a frequency resource location, a resource offset, a resource period, the number of repetitions, the number of SRS symbols, an SRS bandwidth, or the like), hopping related information, an SRS resource type, a sequence ID, spatial relation information, and the like.

The UE may switch a BWP (Bandwidth Part) transmitting the SRS or switch an antenna per slot. The UE may apply at least one of intra-slot hopping and inter-slot hopping to the SRS transmission.

Here, in Rel. 15/16, the number of the A-SRS resource sets which can be dynamically triggered by the DCI is defined three at a maximum for the usages for the all SRS resource sets. In the future, more numbers of A-SRS resource sets can be preferably used.

As a method of CSI feedback, (1) periodic CSI (P-CSI) report, (2) aperiodic CSI (A-CSI) report, (3) semi-persistent CSI (SP-CSI) report, and the like are under study.

In Rel. 15/16, the A-SRS can be triggered by DCI format 0_1/1_1/2_3. However, in a case that an A-SRS is triggered by DCI format 0_1, UL-SCH (UL data) or A-CSI report is also to be transmitted on a PUSCH except for a case that a cyclic redundancy check (CRC) in the DCI (PDCCH) is scrambled by a radio network temporary identifier (RNTI) for SP-CSI reporting (SP-CSI-RNTI). The SP-CSI-RNTI is used to activate/deactivate the SP-CSI report by the DCI.

For example, in a case that an uplink shared channel (UL-SCH) identifier (indicator) is 0 in DCI format 0_1, the UE does not transmit the UL data on a PUSCH scheduled by DCI format 0_1. In a case that the UL-SCH identifier is 1, the UE transmits the UL data on the PUSCH. Then, the UE does not assume that the UL-SCH identifier is 0 and the CSI request field is entirely 0 (i.e., the UE transmits the UL data or the A-CSI report on the PUSCH) except for a case that the CRC in DCI format 0_1 is scrambled by the SP-CSI-RNTI.

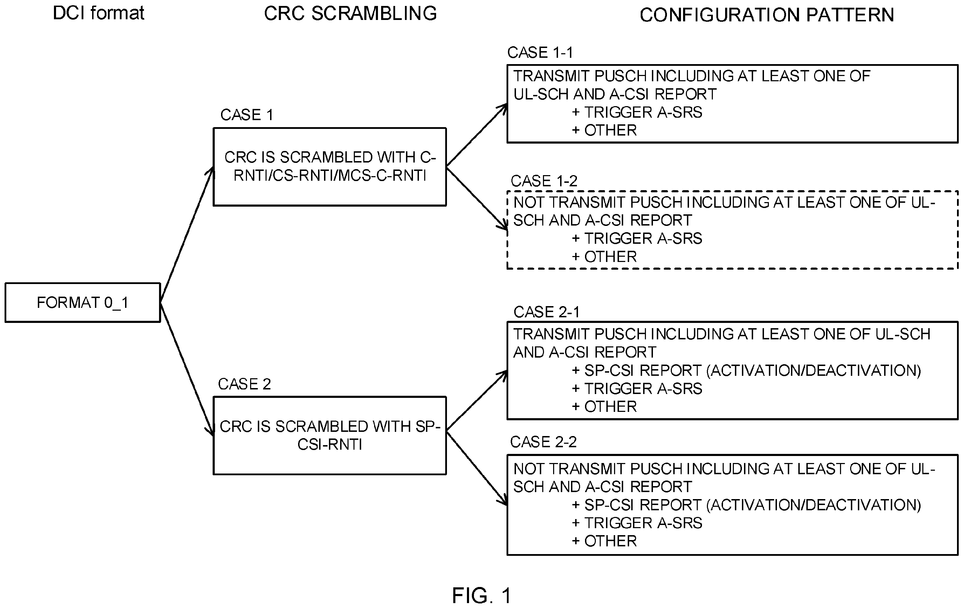

FIG. 1 is a diagram to show an example of a configuration pattern for DCI format 0_1. As shown in FIG. 1, in a case that the CRC is scrambled by a Cell RNTI (C-RNTI)/Configured Scheduling RNTI (CS-RNTI)/Modulation Coding Scheme Cell RNTI (MCS-C-RNTI) (case 1), it can be configured in Rel. 15/16 that a PUSCH including at least one of the UL-SCH and the A-CSI report is transmitted, and further, the A-SRS is triggered (case 1-1). However, in the case 1, it cannot be configured in Rel. 15/16 that the PUSCH including at least one of the UL-SCH and the A-CSI report is not transmitted, and further, the A-SRS is triggered (case 1-2).

On the other hand, in the case that the CRC is scrambled by the SP-CSI-RNTI (case 2), it can be configured in Rel. 15/16 that the PUSCH including at least one of the UL-SCH and the A-CSI report is transmitted (or is not transmitted), and further, the SP-CSI report (activation/deactivation) is transmitted and the A-SRS is triggered.

As described above, the existing A-SRS transmission control using the DCI is somehow inflexible. For example, a configuration like the case 1-2 in FIG. 1 is not permitted. In a case that the SRS is not appropriately controlled, throughput reduction, communication quality deterioration, or the like may be involved.

Thus, the inventors of the present invention came up with the idea of a method for not assuming transmission of a UL-SCH and an A-CSI report, and assuming that an A-SRS is triggered, in a case that DCI is received and a CRC of the DCI is scrambled by a specific RNTI. This makes it possible to appropriately configure (or indicate) A-SRS triggering.

Hereinafter, embodiments according to the present disclosure will be described in detail with reference to the drawings. The radio communication methods according to respective embodiments may each be employed individually, or may be employed in combination.

Note that in the present disclosure, activation, deactivation, indication, selection, update, determination, and the like may be interchangeably interpreted. In the present disclosure, sequence, list, set, group, and the like may be interchangeably interpreted. In the present disclosure, a UL-SCH, uplink transport channel, an uplink data, UL data, and a transport block (TB) may be interchangeably interpreted.

In the following embodiments, the UE may be configured with more than one SRS resource sets of the same usage (for example, usage = codebook, usage = non-codebook, and so on).

In the present disclosure, an A-SRS resource trigger may be simply referred to as a resource trigger. In the present disclosure, an "SRS resource set of (A-SRS) resource trigger = i" (i represents an integer) may be interpreted as at least one of an SRS resource set in which a higher layer parameter of an A-SRS resource trigger (aperiodicSRS-ResourceTrigger) is configured to be i, and an SRS resource set in which an entry of a higher layer parameter of an A-SRS resource trigger list (aperiodicSRS-ResourceTriggerList) is configured to be i.

Note that although a possible value of the resource trigger in Rel-15 NR is 1, 2, or 3, a possible value of the resource trigger in the present disclosure is not limited to these. In the present disclosure, "A/B" may be interpreted as "at least one of A and B."

### (Radio Communication Method)

### <First Embodiment>

The UE may assume that an A-SRS is not triggered by an SRS request, in a case of receiving DCI (for example, DCI format 0_1), where a CRC of the DCI is scrambled by a specific RNTI (an RNTI other than an SP-CSI-RNTI), a configuration/indication that a UL-SCH is not transmitted (a UL-SCH identifier is 0) is made, and a CSI request is not triggered (a CSI request field is entirely 0 or the CSI request field is 0 bits) (an A-CSI report is not transmitted). In the present disclosure, "triggered" may be interpreted as "a trigger is configured/indicated."

In the present disclosure, a specific RNTI (an RNTI other than the SP-CSI-RNTI) may be any of a C-RNTI, a CS-RNTI, and an MCS-C-RNTI, or a specific RNTI defined by the specification. In the present disclosure, DCI format 0_1 may be interpreted as DCI format 1_1, DCI format 2_3, or other DCI formts.

A correspondence relation (for example, a table) between a value of an SRS request field and a triggered A-SRS resource set used in the above case may be defined. Then, the UE, in the above case, may determine the triggered A-SRS resource set based on the correspondence relation and the value of the SRS request field.

Hereinafter, the above correspondence relation will be specifically described. Note that in the present disclosure, a correspondence relation, a table, a list, a mathematical expression based on a correspondence relation, an array based on correspondence relation, and the like may be interchangeably interpreted.

### {Option 1-1}

The UE may assume to use, as the above correspondence relation, a correspondence relation in a case that the SRS request field has a specific number of bits (X bits) and the UL-SCH identifier is 1 (or the CSI request is triggered). X may be configured by the RRC, may be activated by the MAC, or may be defined by the specification.

Note that in a case that, for example, a table of the SRS request field having Y (> X) bits is defined and the SRS request field having X bits is indicated to the UE, the UE may assume that lower-order (or higher-order) X bits of Y bits express the value of the SRS request. In other words, the UE may interpret lower-order (or higher-order) X bits of Y bits as the value of the SRS request field and the remaining bits of Y bits as a specific value (for example, 0, 1) to use the Y bits for referencing the table of the SRS request field for the Y bits.

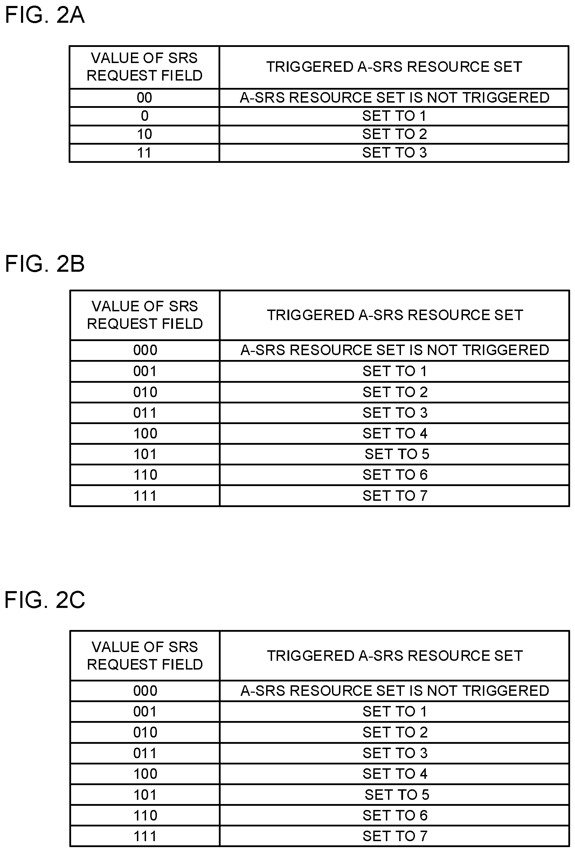

FIGS. 2A, 2B, and 2C are diagrams to show examples of a correspondence relation between a value of an SRS request field and a triggered A-SRS resource set in a case that a UL-SCH identifier is 1 (or a case that a CSI request is triggered). In FIGS. 2A to 2C, "set to X" may express that an A-SRS resource set #X (or an SRS resource set of resource trigger = X) is triggered (the same applies to other drawings). FIG. 2A shows an example in which the SRS request field has 2 bits. FIG. 2B shows an example in which the SRS request field has 3 bits.

FIG. 2C shows an example in which Y = 3 and X = 2. Specifically, the UE is notified of lower-order (or higher-order) 2 bits of the value of the SRS request field of 3 bits through the DCI. For example, the UE may assume that in a case that the value of the SRS request field notified through DCI format 0_1 is "01," the value of the SRS request field in the table in FIG. 2C of "001" (or "010") is notified.

### {Option 1-2}

The UE may assume that the correspondence relation (table) between the value of the SRS request field and the triggered A-SRS resource set is different between the case that the UL-SCH identifier is 1 (or the case that the CSI request is triggered) and the case that the UL-SCH identifier is 0 (or the case that the CSI request is not triggered).

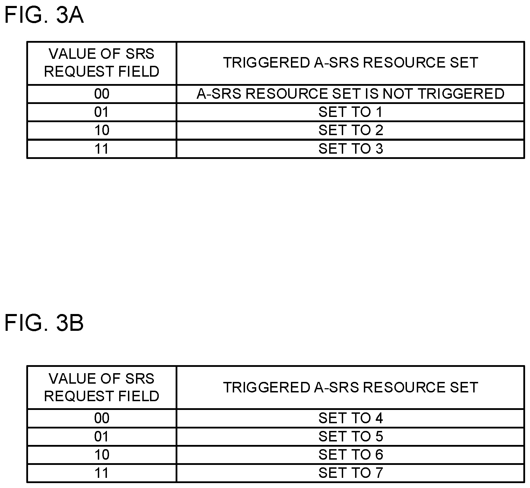

FIGS. 3A and 3B are diagrams to show other examples of the correspondence relation between the value of the SRS request field and the triggered A-SRS resource set in the case that the UL-SCH identifier is 0 (or the case that the CSI request is not triggered). In this example, assume that FIG. 2A shows the correspondence relation between the value of the SRS request field and the triggered A-SRS resource set in the case that the UL-SCH identifier is 1 (or the case that the CSI request is triggered).

FIG. 3A is a diagram to show an example of the correspondence relation between the value of the SRS request field and the triggered A-SRS resource set in the case that the UL-SCH identifier is 0 (or the case that the CSI request is not triggered). As shown in FIG. 3A, part of the configuration (for example, "set to 1," "set to 2," or "set to 3") may be the same as the configuration in the case that the UL-SCH identifier is 1 (or the case that the CSI request is triggered) (FIG. 2A). FIG. 3B is a diagram to show another example of the correspondence relation between the value of the SRS request field and the triggered A-SRS resource set in the case that the UL-SCH identifier is 0 (or the case that the CSI request is not triggered).

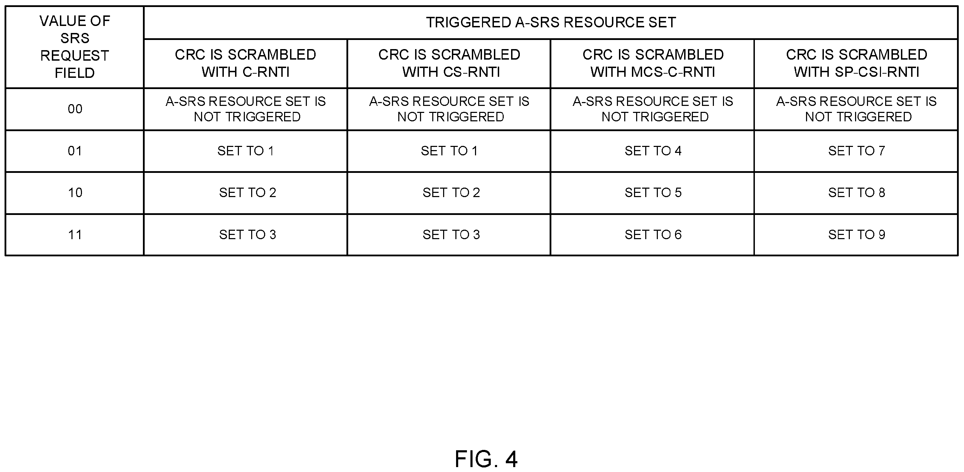

For example, in a case that the value of the SRS request field is "00," the triggered A-SRS resource set is 1 in FIG. 3A or 4 in FIG. 3B. Note that in FIG. 3B, the triggered A-SRS resource sets 1 to 3 are not present. Therefore, in a case that the A-SRS resource sets 1 to 3 are triggered, the UL-SCH identifier needs to be configured with 1 or the CSI request needs to be triggered. Note that in FIGS. 3A and 3B, a case that "the A-SRS resource set is not triggered" is not present, but may be present.

### {Option 1-3}

The UE may assume that the correspondence relation (table) between the value of the SRS request field and the triggered A-SRS resource set is configured for each RNTI scrambling a CRC of the DCI.

FIG. 4 is a diagram to show an example of the correspondence relation between the value of the SRS request field and the triggered A-SRS resource set per RNTI scrambling the CRC of the DCI. As shown in FIG. 4, the relation between the value of the SRS request field and the triggered A-SRS resource set may be different depending on the RNTI scrambling the CRC of the DCI, or at least part of the relation may coincide.

In the example shown in FIG. 4, the triggered A-SRS resource set is the same in a case that the CRC is scrambled by the C-RNTI and in a case that the CRC is scrambled by the CS-RNTI. On the other hand, the triggered A-SRS resource set is different between a case that the CRC is scrambled by the C-RNTI or the CS-RNTI and a case that the CRC is scrambled by the MCS-C-RNTI or the SP-CSI-RNTI.

The tables the UE references (for example, FIGS. 2A to 2C, FIGS. 3A and 3B, or FIG. 4) may be switched by the higher layer signaling (for example, the RRC or the MAC CE). The number of bits X or Y of the SRS request field may be configured by the RRC, may be activated by the MAC, or may be defined by the specification.

According to the first embodiment, even in the case that the UE is configured to not transmit the UL-SCH and the CSI request is not triggered (the A-CSI report is not transmitted), the A-SRS can be triggered. Specifically, only the A-SRS can be triggered while the current terminal operation can be configured. Thus, A-SRS triggering can be appropriately configured (or indicated).

### <Second Embodiment>

The UE may not assume transmission of a UL-SCH (may not transmit a UL-SCH), in a case of receiving DCI (for example, format 0_1), where a CRC of the DCI is scrambled by a specific RNTI (an RNTI other than an SP-CSI-RNTI), a configuration/indication that the UL-SCH is transmitted (a UL-SCH identifier = 1) is made, and an A-SRS is triggered by an SRS request. Specifically, the UE may ignore the UL-SCH identifier. In this case, the UE may operate in accordance with at least one of options 2-1 to 2-3 below.

### {Option 2-1}

The UE may not transmit a UL-SCH on a PUSCH (or may not assume transmission of a UL-SCH on a PUSCH). Specifically, the UE may interpret the UL-SCH identifier as 0.

### {Option 2-2}

The UE may not transmit a UL-SCH and an A-CSI report on a PUSCH (may not assume transmission of a UL-SCH and an A-CSI report). Specifically, the UE may interpret the UL-SCH identifier as 0, and the CSI request as entirely 0.

### {Option 2-3}

The UE may switch which of the option 2-1, the option 2-2, or the operation in Rel. 15/16 is to apply based on the higher layer signaling (for example, the RRC or the MAC CE). The "operation in Rel. 15/16" referred to here may be interpreted as an operation that the UL-SCH identifier field and the CSI request field are not interpreted as the value of the SRS request field."

According to the second embodiment, the A-SRS can be triggered even if the UE does not transmit the UL-SCH.

### <Third Embodiment>

The UE may not assume transmission of an A-CSI report (may not transmit an A-CSI report), in a case of receiving DCI (for example, format 0_1), where a CRC of the DCI is scrambled by an RNTI other than an SP-CSI-RNTI, a CSI request is triggered (a CSI request is not entirely 0), and an A-SRS is triggered by an SRS request. Specifically, the UE may ignore the CSI request. In this case, the UE may operate in accordance with at least one of options 3-1 to 3-3 below.

### {Option 3-1}

The UE may not transmit an A-CSI report on a PUSCH (may not assume an A-CSI report on a PUSCH). Specifically, the UE may interpret the CSI request as entirely 0.

### {Option 3-2}

The UE may not transmit a UL-SCH and an A-CSI report on a PUSCH (may not assume transmission of a UL-SCH and an A-CSI report). Specifically, the UE may interpret the UL-SCH identifier as 0, and the CSI request as entirely 0.

### {Option 3-3}

The UE may switch which of the option 3-1, the option 3-2, or the operation in Rel. 15/16 is to apply based on the higher layer signaling (for example, the RRC or the MAC CE). The "operation in Rel. 15/16" referred to here may be interpreted as an operation that the UL-SCH identifier field and the CSI request field are not interpreted as the value of the SRS request field."

According to the third embodiment, the A-SRS can be triggered even if the UE does not transmit the A-CSI report.

### <Variation 1>

In the first embodiment/the second embodiment (in the case of not transmitting the UL-SCH), the UE may assume that the triggered A-SRS resource set is configured depending on a combination of a DCI field used for the UL-SCH transmission on the PUSCH (for example, the precoding information and number of layers field, a modulation and coding scheme (MCS) field, or the like) and the SRS request field. In other words, the SRS request field in the first embodiment/the second embodiment may be interpreted as a combination of the SRS request field and another DCI field.

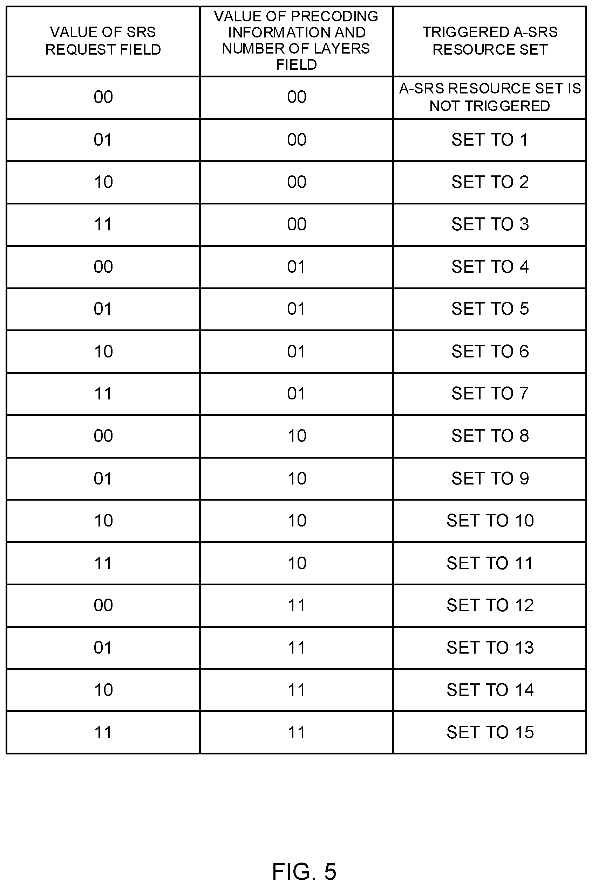

FIG. 5 is a diagram to show an example of a correspondence relation between the value of the SRS request field, the value of the precoding information and number of layers field, and the triggered A-SRS resource set. The UE may determine the A-SRS resource set based on the value of the RS request field and the value of the precoding information and number of layers field. Note that the value of the precoding information and number of layers field in FIG. 5 may be interpreted as a value of the modulation and coding scheme (MCS).

According to variation 1, a trigger candidate for the A-SRS resource set can be increased compared to the case of using only the SRS request field.

### <Variation 2>

In the third embodiment (in the case of not transmitting the A-CSI report), the UE may assume that the triggered A-SRS resource set is configured depending on a combination of the DCI field used for the A-CSI report on the PUSCH (for example, the CSI request field) and the SRS request field.

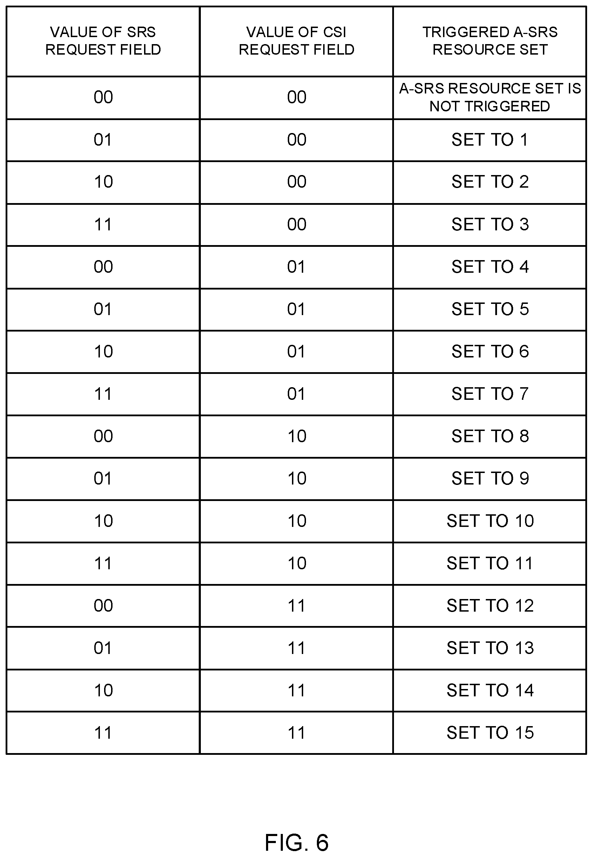

FIG. 6 is a diagram to show an example of a correspondence relation between the value of the SRS request field, the value of the CSI request field, and the triggered A-SRS resource set. The UE may determine the A-SRS resource set based on the value of the SRS request field and the value of the CSI request field.

According to variation 2, the trigger candidate for the A-SRS resource set can be increased compared to the case of using only the SRS request field.

### <Variation 3>

In a case that the processing shown in the first embodiment/the second embodiment/the third embodiment is configured through the higher layer signaling (for example, the RRC) (or a case that a specific configuration is made), it may be assumed that the DCI field used for the UL-SCH transmission on the PUSCH (for example, the modulation and coding scheme (MCS) field/the precoding information and number of layers field) and the DCI field used for the A-CSI report (for example, the CSI request) are zero-padded (or all bit values are 0).

The "case that a specific configuration is made" described above may be a case that the UE receives the DCI with the CRC scrambled by the RNTI other than the SP-CSI-RNTI, the UL-SCH identifier is 0, and it is indicated that the CSI request field is entirely 0 (or the CSI request field is 0 bits).

According to the variation 3, the UE can reference the zero-padded DCI field to determine to not transmit the UL-SCH and the A-CSI report.

### <Other Aspects>

The UE may perform the processing of the first embodiment/the second embodiment/the third embodiment, in a case of receiving DCI with a CRC scrambled by an RNTI for triggering an A-SRS (for example, an A-SRS-RNTI).

### {Definition Example of DCI format 0_1}

In the case that the processing shown in the first embodiment/the second embodiment/the third embodiment is configured through the higher layer signaling (for example, the RRC) (for example, a higher layer parameter "aperiodicSrsConfig" is configured), DCI format 0_1 may be defined as below.

One bit is configured for a UL-SCH indicator field. A UL-SCH indicator, in a case of having a value of "1," indicates that a UL-SCH is transmitted on a PUSCH, and in a case of having a value of "0," indicates that a UL-SCH is not transmitted on a PUSCH.

In the case that the higher layer parameter
"aperiodicSrsConfig" is configured, the UE may assume to receive DCI format 0_1 with the UL-SCH identifier configured to 0 and the CSI request entirely configured to zero. In a case that the higher layer parameter "aperiodicSrsConfig" is not configured, except for a case that the CRC in DCI format 0_1 is scrambled by the SP-CSI-RNTI, the UE may not assume to receive DCI format 0_1 with the UL-SCH identifier configured to 0 and the CSI request entirely configured to zero.

### {Definition Example of New DCI format}

The UE may assume that a DCI format including only fields required for the A-SRS triggering (for example, possibly referred to as DCI format 2_4, DCI format 0_2, DCI format 3_0, and so on) (A-SRS triggering-dedicated DCI format) is indicated.

According to the embodiments described above, the UE can appropriately configure (or indicate) the A-SRS triggering.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

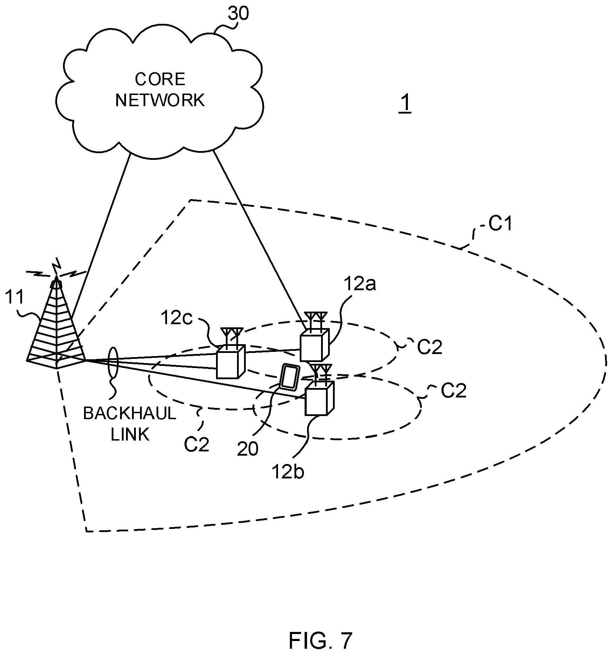

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

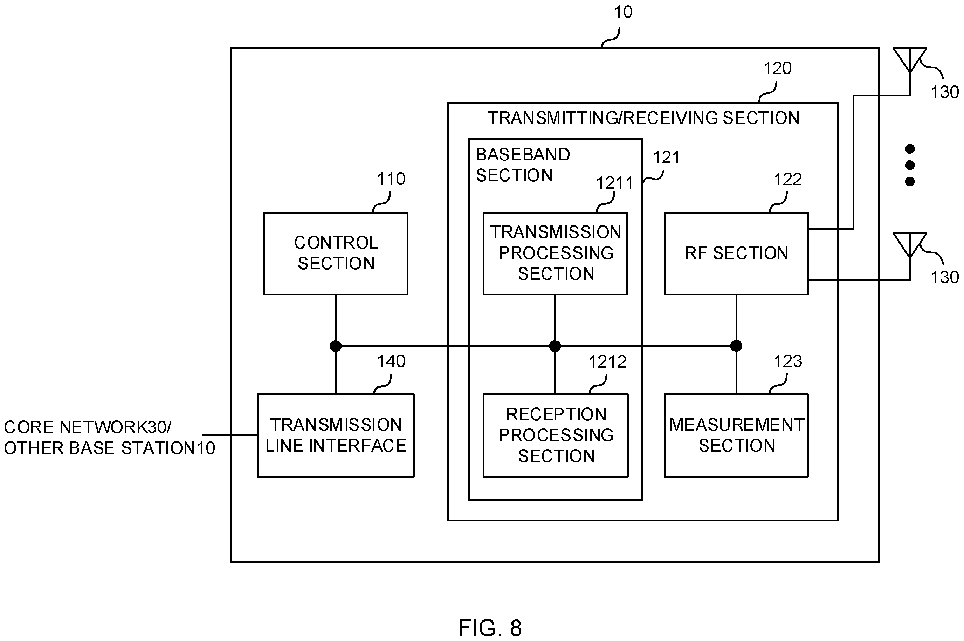

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit the DCI.

The control section 110 may generate downlink control information (DCI) with a cyclic redundancy check (CRC) scrambled by a specific radio network temporary identifier (RNTI), the DCI being for receiving an aperiodic sounding reference signal (A-SRS), and assume that an uplink shared channel (UL-SCH) and an aperiodic channel state information (A-CSI) report are not transmitted based on the DCI.

### (User Terminal)

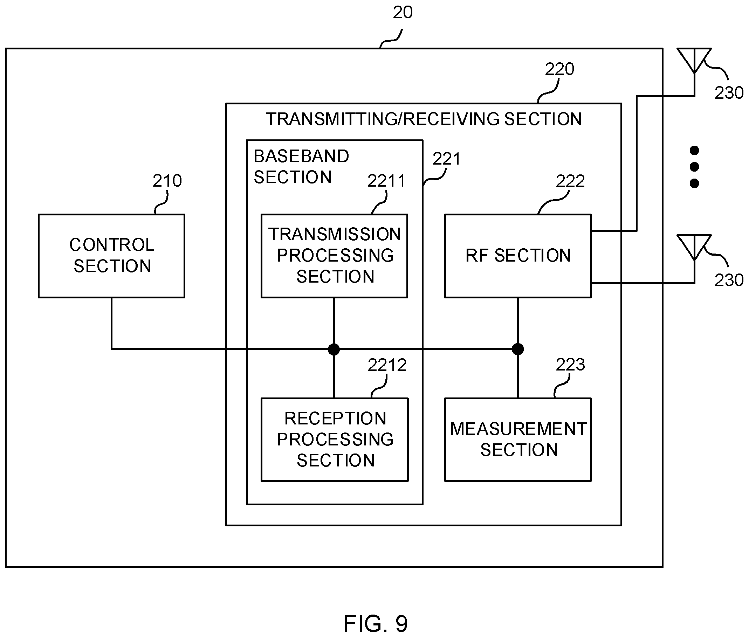

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive the downlink control information (DCI).

The control section 210 may not assume transmission of an uplink shared channel (UL-SCH) and an aperiodic channel state information (A-CSI) report and assume that an aperiodic sounding reference signal (A-SRS) is triggered, in a case that a cyclic redundancy check (CRC) of the DCI is scrambled by a specific radio network temporary identifier (RNTI).

The control section 210 may assume that the A-SRS is triggered, in a case that the CRC of the DCI is scrambled by the specific RNTI, a configuration that the UL-SCH is not transmitted is made, and a CSI request is not triggered.

The control section 210 may not assume the transmission of the UL-SCH, in a case that the CRC of the DCI is scrambled by the specific RNTI, a configuration that the UL-SCH is transmitted is made, and the A-SRS is triggered.

The control section 210 may not assume the transmission of the A-CSI report, in a case that the CRC of the DCI is scrambled by the specific RNTI, a CSI request is triggered, and the A-SRS is triggered.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

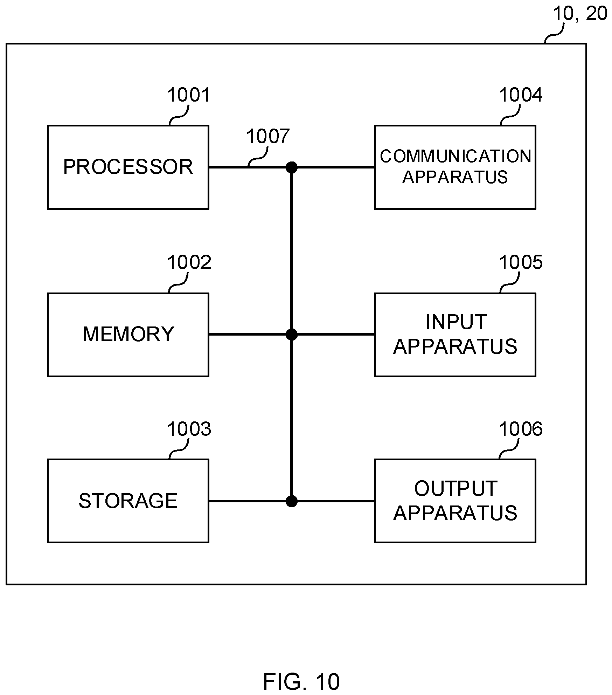

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a, " "an," and "the" in the English language is added by translation, the present disclosure may include a plural form of a noun after these articles.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives downlink control information (DCI); and
a control section that does not assume transmission of an uplink shared channel (UL-SCH) and an aperiodic channel state information (A-CSI) report and assumes that an aperiodic sounding reference signal (A-SRS) is triggered, in a case that a cyclic redundancy check (CRC) of the DCI is scrambled by a specific radio network temporary identifier (RNTI).

2. The terminal according to claim 1, wherein
the control section assumes that the A-SRS is triggered, in a case that the CRC of the DCI is scrambled by the specific RNTI, a configuration that the UL-SCH is not transmitted is made, and a CSI request is not triggered.

3. The terminal according to claim 1, wherein
the control section does not assume the transmission of the UL-SCH, in a case that the CRC of the DCI is scrambled by the specific RNTI, a configuration that the UL-SCH is transmitted is made, and the A-SRS is triggered.

4. The terminal according to claim 1, wherein
the control section does not assume the transmission of the A-CSI report, in a case that the CRC of the DCI is scrambled by the specific RNTI, a CSI request is triggered, and the A-SRS is triggered.

5. A radio communication method for a terminal, the radio communication method comprising:
receiving downlink control information (DCI); and
scrambling a cyclic redundancy check (CRC) of the DCI by a specific radio network temporary identifier (RNTI), not assuming transmission of an uplink shared channel (UL-SCH) and an aperiodic channel state information (A-CSI) report, and assuming that an aperiodic sounding reference signal (A-SRS) is triggered.

6. A base station comprising:
a control section that generates downlink control information (DCI) with a cyclic redundancy check (CRC) scrambled by a specific radio network temporary identifier (RNTI), the DCI being for receiving an aperiodic sounding reference signal (A-SRS), and assumes that an uplink shared channel (UL-SCH) and an aperiodic channel state information (A-CSI) report are not transmitted based on the DCI; and
a transmitting section that transmits the DCI.
